# EUROPEAN PATENT SPECIFICATION

(11) **EP 3 423 382 B1**
(45) Date of publication and mention of the grant of the patent: **21.12.2022**
(21) Application number: 17715801.1
(22) Date of filing: 01.03.2017
(51) Int. Cl.: B65F 3/08, B65F 3/26, B65F 3/28

(54) **SYSTEM FOR PROCESSING CONFIDENTIAL MATERIAL**
SYSTEM ZUR VERARBEITUNG VON VERTRAULICHEM MATERIAL
SYSTÈME DE TRAITEMENT DE DOCUMENTS CONFIDENTIELS

(30) Priority: 02.03.2016 NL 2016354
(43) Date of publication of application: 09.01.2019
(73) Proprietor: Van Schijndel Holding B.V., 6051 KL Maasbracht (NL)
(72) Inventor: VAN SCHIJNDEL, Gijsbertus Marinus Johanna, 6051 KL Maasbracht (NL); VAN SCHIJNDEL, Cornelis Gijsbertus, 6051 KL Maasbracht (NL)
(74) Representative: Algemeen Octrooi- en Merkenbureau B.V.
(86) International application number: PCT/NL2017/050123
(87) International publication number: WO 2017/150972

(56) References cited:
- EP-A1- 2 014 584
- NL-C1- 2 000 672
- US-A1- 2003 042 343

## Description

The invention relates to a system according to the preamble of claim 1, comprising a device for processing confidential material.

The device is provided with a lifting mechanism for moving at least one bin for collecting confidential material, which lifting mechanism is disposed in a closable space of the device, wherein the bin can be moved from a loading position to an emptying position by means of the lifting mechanism, wherein the closed space makes access to the bin impossible once the bin has been placed in the loading position.

EP 2 067 720 describes a system for processing confidential material according to the preamble of claim 1. In the known system, it is possible to load a bin into a lifting mechanism, close the space containing the lifting mechanism such that the bin is no longer accessible from outside and subsequently empty the bin into a trough, from where the material can be discharged to a storage container of the system. In the storage container, further processing of the material may take place, for example compressing the material by means of a compressing mechanism.

The advantage of the known system is that because the bins are loaded on the rear side, the bins can be screened off and be emptied relatively quickly, so that the confidentiality of the material is guaranteed by the closable space when processing takes place and the number of bins that can be emptied per unit time is relatively high.

NL 2000672 discloses a mobile shredder device comprising a frame mounted on wheels, a container for shredded paper, a shredder, a collecting unit and a lifting mechanism for bins containing the paper material to be shredded.

US 2003/0042343 A1 D2 discloses a mobile shredding system mounted on a vehicle. The system has a hopper, for receiving material to be shredded, a shredder communicating with the hopper, and a holding space for shredded waste into which the shredder feeds shredded material. A bin lifting means with a carriage for the bin is mounted on a side of the vehicle. By means of the bin lifting means a bin is movable from a lowered position, in which the carriage is adjacent the ground on which the vehicle is standing, and a raised position, in which the carriage is adjacent an inlet of the hopper and the content of the bin is emptied into the hopper via the inlet.

It is an object of the present invention to improve the known system by providing a relatively compact device by means of which an even higher degree of confidentiality in the handling of the material from the bins that is to be processed can be guaranteed.

This object is achieved with the system according to claim 1.

Using the system according to claim 1, it is achieved that the bins can be emptied in an efficient manner and the material to be processed from the bins will be directly destroyed by means of the shredding mechanism disposed in the device before further processing by means of the device is to be carried out. Further processing steps of the system are, for example, moving the shredded material and/or compressing the shredded material. In this way the degree of confidentiality in the processing of the confidential material collected from the customer can be further increased. Furthermore, the information in the confidential material will no longer be accessible after the material has exited the device, because the material has been shredded. Moreover, the shredded material can be compressed into a more compact form than material that has not been shredded, so that more material can be stored in a particular (storage) volume. Use of the shredding mechanism thus makes it possible to empty more bins before a storage compartment is filled with shredded material.

The shredding mechanism disposed in a space of the device that is not closed is moreover easily accessible to a serviceman for repairs and/or maintenance.

The collecting unit and the shredding mechanism are configured and disposed in the device in such a manner that that the volume of the closable space need not increase in comparison with the closable space that is known from EP 2 067 720. This makes it possible to provide a relatively compact device.

Using the collecting unit, it is possible to collect confidential material before it is destroyed by activating the shredding mechanism. In this way it is possible to provide a shredding mechanism with an economical energy consumption, which is not activated until a specific amount of material has been collected in the collecting unit.

The collecting unit of the device is centrally disposed in relation to the width of the closable space and may extend over at least half the width of the closable space. The collecting unit comprises at least a first collecting unit part, wherein at least a width dimension, measured in the transverse direction of the closable space, between inner walls of the collecting unit decreases in the direction of the outlet, and at least a second collecting unit, wherein at least the width dimension between the inner walls of the collecting unit remains constant. A collecting unit thus configured ensures that relatively low-weight confidential material such as paper, for example, can be supplied to the shredding mechanism disposed directly under a collecting unit in an efficient and continuous manner under the influence of the force of gravity by means of the further collecting unit part. Achieving a continuous supply of low-weight confidential material into the shredding mechanism is also made easier if at least one inner wall of the first collecting unit part includes a maximum angle with the vertical of less than 35 degrees. An inner wall of the space may form part of the collecting unit, such that part of the inner wall of the space forms at least part of the inner wall of the collecting unit for guiding the material from the bin to the shredding mechanism.

The shredding mechanism is disposed centrally in the transverse direction of the closable space. To provide a relatively high processing capacity, the shredding mechanism and in particular the inlet and/or the outlet of the shredding mechanism, extend(s) over at least 20% of the width of the closable space. The shredding mechanism preferably extends over the entire width of the closable space so as to maximise the width of the inlet and/or the outlet of the shredding mechanism.

The device is further provided with a rotatable processing unit disposed directly below the shredding mechanism for compressing the shredded material from the shredding mechanism and/or moving said material via a passage to a storage compartment. Seen in vertical direction, the shredding mechanism is disposed between the collecting unit and the rotatable processing unit. The rotatable processing unit is disposed under the shredding mechanism, so that the shredded material will fall into the rotatable processing unit under the influence of the force of gravity. By positioning the rotatable processing unit in front of the inlet of a passage in the device, the shredded material can be moved to the outlet of the passage by means of the rotatable processing unit. The outlet of the passage may form the outlet of the device. There is no need for other moving means for conveying the shredded material in the passage or in a storage space disposed downstream of the passage. Using the rotatable processing unit, it is further possible to compress the shredded material so as to increase the density of the shredded material for storage. The material is preferably compressed and at the same time transported through the passage by means of the rotatable processing unit.

The system comprises a storage compartment in addition to the above-described device. The storage compartment has the same function as the container indicated at numeral 9 in the figures of EP 2 067 720.

The device of the system is a rear loader that is mounted to the rear side of the storage compartment. The advantage of a rear loader is that it can be positioned fairly low relative to a ground surface and can extend below the level of the chassis of the vehicle, so that the walls of the space that makes access to the bin on the rear side of the vehicle impossible can extend from below the chassis to relatively far above the chassis. In this way the bin can be made inaccessible not only be means of the closable space, but the rear loader can also provide sufficient vertical height for the space to make it possible to position the lifting mechanism therein and tilt the bins upon emptying the same into the space, as well as for the collecting unit, the shredding mechanism and the rotatable processing unit that are disposed vertically below each other under the emptied bins.

More in particular, the device is pivotally connected to the storage compartment near the rear side and also near the upper side of the storage compartment. To empty the storage compartment, the device can be pivoted from a position of use, in which material from the bins is to be processed, to an emptying position. In the emptying position, the shredded material can be removed from the storage compartment via an at least partially open rear side of the storage compartment. In this way the storage compartment can be filled and emptied relatively quickly by means of the device. The confidential material stored in a storage compartment has already been destroyed by means of the shredding mechanism in the device. Not only is confidentiality in the handling of the material to be processed guaranteed in this way, because the material is destroyed directly after the bin has been emptied, but in addition to that the need for a destruction step in a subsequent process is obviated.

Finally, the invention comprises a method for processing confidential material according to claim 13, wherein a bin is placed in a lifting mechanism disposed in a closable space, after which the space is closed to make access to the bin impossible before the bin is moved to the emptying position, wherein the material falling out of the bin upon emptying thereof is shredded.

The space preferably remains closed during the shredding of the material, wherein the space is opened after said shredding, so that the bin can be removed from the loading position. In this way it is ensured that unauthorised persons cannot get access to the confidential material after the bin has been placed in the loading position.

The device as well as the system for processing confidential material will now be explained in more detail with reference to the embodiments shown in the figures.
Figure 1 is a side view of a system for processing confidential material, showing a bin in the loading position in the device of the system;
Figure 2 is a side view of the system for processing confidential material shown in figure 1, showing a bin in the emptying position in the device;
Figure 3 is a rear view of a device for processing confidential material;
Figure 4 shows an alternative embodiment of a device for processing confidential material.

Like parts are indicated by the same numerals in the figures.

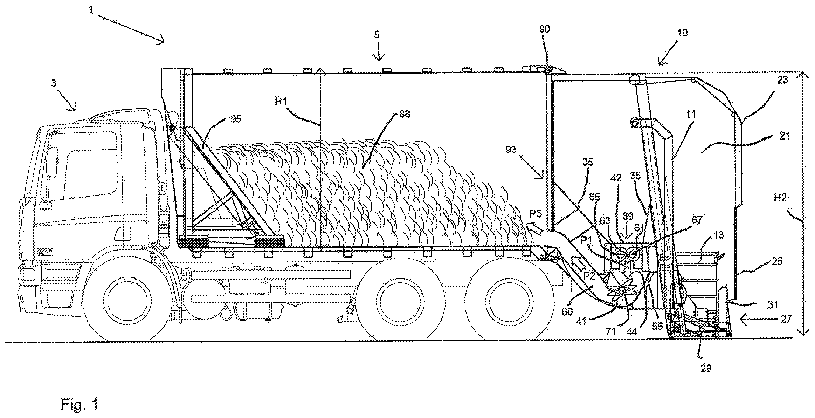

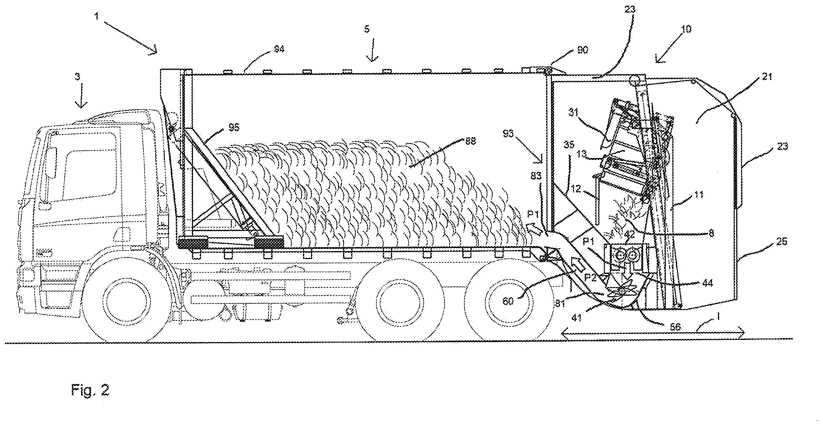

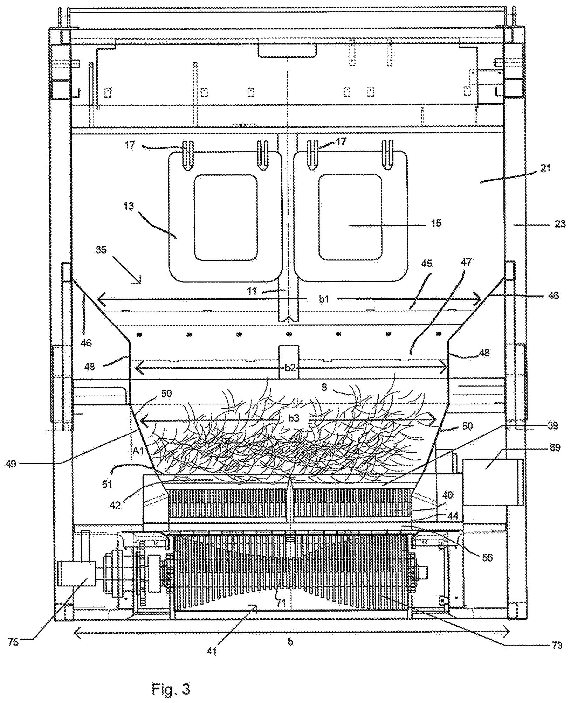

Figures 1 and 2 are side views of a mobile system 1 for processing confidential material. The system 1 comprises a lorry 3, a storage compartment 5 as well as a device 10 for processing confidential material. Figure 3 shows a rear view of the device 10. The device 10 is configured as a rear loader, which is disposed on a rear side 93 of the storage compartment 5.

Confidential material may comprise, inter alia, document files, papers or digital data carriers.

The device 10 comprises a lifting mechanism 11 for moving to bins 13, 15 in which confidential material is to be collected. The bins 13, 15 shown in the figure have a volume of about 240 litre.

Such bins 13, 15 are known per se, they may be provided with two wheels 17 on one side, so that the bin 13, 15 can be moved over a ground surface by means of the wheels after being tilted slightly. In this way the bins 13, 15 can be wheeled into the lifting mechanism 11, for example by an operator. The bins 13, 15 may furthermore comprise a cover 12 on the upper side, as well as a slit (not shown), through which the confidential material can be fed into the bin 13, 15. The slit may be dimensioned so that feeding confidential material into the bin is possible, but the possibility of getting access to the interior of the bin 13, 15 via the slit is limited, so that it is virtually impossible to remove material from the bin 13, 15 via the slit.

The lifting mechanism 11, which is known from EP 2 067 720, is disposed in a closable space 21 of the device 10. The closable space 21 comprises a housing 23 provided with a gate 25 as well as a part 27 of the lifting mechanism 11, into which the bins 13, 15 are to be loaded. This part 27 of the lifting mechanism 11 comprises a platform 29 and a pivotable ramp 31. Using the lifting mechanism 11, the bin 13, 15 positioned on the platform 29 can be moved from a loading position as shown in figure 1 to an emptying position as shown in figure 2. Once the bin 13, 15 is in the loading position, the space 21 can be closed by means of the gate 25 and the ramp 31, so that the bins 13, 15 can no longer be manually accessed, for example by an operator of the device 10. At least the upper side of the bins 13, 15 should no longer be manually accessible. In the emptying position, the bin 13, 15 can be emptied of its confidential contents, so that the confidential material 8 will fall into a collecting unit 35, under which a shredding mechanism 39 is disposed, by means of which the confidential material 8 from the bin 13, 15 can be shredded.

The collecting unit 35, the shredding mechanism 39 and a rotatable processing unit 41 are disposed centrally in the transverse direction of the closable space 21, as shown in figure 3, i.e. the centre of the collecting unit 35, the centre of the shredding mechanism 39 and the centre of the rotatable processing unit 41 coincide with the centre of the closable space 21, seen in the transverse direction of the closable space 21.

As shown in figure 3, the collecting unit 35 comprises a first funnel-shaped collecting unit part 45, wherein at least a width dimension b1, measured in the transverse direction b of the closable space 21, between inner walls 46 of the collecting unit 35 decreases in the direction of the outlet 51 of the collecting unit 35. At the inlet of the collecting unit, the width dimension is maximal and equals the width b of the closable space 21. The collecting unit 35 further comprises a straight (seen in the transverse direction) collecting unit part 47, wherein at least the width dimension b2 between the inner walls 48 of the collecting unit 35 remains constant, as well as a second funnel-shaped collecting unit part 49, wherein likewise at least a width dimension b3, measured in the transverse direction b of the closable space 21, between inner walls 50 of the collecting unit 35 decreases in the direction of the outlet 51 of the collecting unit 35. The straight collecting unit part 47 is disposed between the first (45) and the second (49) funnel-shaped collecting unit part. In particular the straight collecting unit part 47 helps to achieve a continuous supply of relatively low-weight material 8 (for example paper) into the shredding mechanism 39. A relatively small angle A1 of the inner wall 50 of the second funnel-shaped collecting unit part 49 relative to the vertical (dotted line in figure 3), is also conducive to a smooth transport of the material into the shredding mechanism 39. The second funnel-shaped collecting unit part 49 therefore preferably includes an angle A1 of less than 35 degrees with the vertical.

As shown in figure 3, the collecting unit 35 has a mirror-symmetrical configuration, seen in the transverse direction b of the closable space, whilst, as shown in figures 1 2, the collecting unit 35 is asymmetrical, seen in the longitudinal direction I.

The shredding mechanism 39 comprises two rotating bodies 61, 63, whose axes of rotation 65, 67 extend in the transverse direction of the closable space 21, wherein a virtual plane through the axes of rotation 65, 67 of the bodies 61, 63 coincides with a horizontal plane. Each rotating body 61, 63 is provided with cutting rotors 40, which extend vertically relative to the axis of rotation 65, 67, for shredding the confidential material 8. The bodies 61, 63 rotate in opposite directions. The two rotating bodies 61, 63 are driven by a driving motor 69. The shredding mechanism 39 may of course be configured differently, for example comprising only one rotating body or more than two rotating bodies.

The collecting unit 35 is disposed above the shredding mechanism 39, such that the outlet 51 of the collecting unit 35 opens into the inlet 42 of the shredding mechanism 39.

Disposed under the shredding mechanism 39 in the device 10 is a rotatable processing unit 41 for compressing the shredded material 88 (indicated by arrow P1) from the shredding machine 39 and move the material in the directions indicated by arrows P2 and P3 to a storage compartment 5. The outlet 44 of the shredding mechanism 39 opens into a trough 56 in which the rotatable processing unit 41 is disposed.

The rotatable processing unit 41 is provided with rotor blades 73 extending away from the shaft 71 of the rotatable processing unit 41, wherein the rotor blades 73 located centrally on the shaft 71 are shorter than the rotor blades located closer to the ends of the shaft 71. The rotatable processing unit 41 is driven by a motor 75. The rotatable processing unit 41 is disposed in front of the inlet 81 of the passage 60, and the shredded material 88 can be moved toward the outlet 83 of the passage 60 by means of the rotatable processing unit 41. The outlet 83 of the passage 60 is larger than the inlet of the passage; preferably, the width dimension of the outlet 83, measured in the transverse direction b of the closable space 21, is substantially the same as the width dimension b of the space 21.

In the device 1 for processing confidential material, an operator can place a bin 13, 15 in a lifting mechanism 11 disposed in a closable space, after which the space 21 is closed, making it impossible to access the bin 13, 15. Using the lifting mechanism 11, the bin 13, 15 can be moved to the emptying position, wherein the material 8 falling out of the bin 13, 15 being emptied is shredded. As shown in figure 2, the bin 13, 15 is emptied into the collecting unit 35 that opens into the shredding mechanism 39 for shredding the material 8. The space 21 can remain closed while the confidential material is being shredded, and the space 21 can be opened after shredding, so that the bin 13, 15 can be removed from the loading position (figure 1) of the lifting mechanism 11. After being shredded, the material 88 can be compressed and at the same time be moved through a passage 60 in one processing operation. The outlet 83 of the passage 60 of the device opens into the storage compartment 5. Compressing and at the same time moving the shredded material 88 is carried out by means of the rotatable processing unit 41. The device 1 does not comprise any other means for moving the destroyed material 88. The storage compartment 5 preferably does not comprise any further means for filling the storage compartment 5 with the destroyed material 88, either. The storage compartment 5 is therefore filled with the destroyed material 88 from the rotatable processing unit 41.

The device 10 is pivotally connected to the storage compartment 5 about a pivot axis 90 near the rear side 93 and also near the upper side 94 of the storage compartment 5. To empty the storage compartment 5, the device 10 can be pivoted about the pivot axis 90 from a position of use (as shown in figures 1, 2 and 4) for processing material from the bins 13, 15 to an emptying position (not shown). In the emptying position, the shredded material 88 can be removed from the storage compartment 5 via an at least partially open rear side 93 of the storage compartment 5. It is possible, for example, to position the storage compartment 5 at a slope for emptying the storage compartment 5.

The storage compartment 5 has a length greater than the width and the height of the storage compartment 5, wherein the length I of the device 10 is smaller than the length of the storage compartment 5. The width of the storage compartment 5 is the same as the width of the device 10. The height H2 of the device 10 is greater than the height H1 of the storage compartment 5.

The width of the inlet of the rotatable processing unit 41 is substantially the same as the width of the outlet 44 of the shredding mechanism 39, measured in the transverse direction of the closable space 21, amounting to about half the width b of the closed space 21. The width dimension of the inlet 42 and/or the outlet 44 of the shredding mechanism 39, measured in the transverse direction of the closable space, is at least 0.4 meter; in the embodiment shown in the figures this width dimension is about 1 meter.

The width of the device 10 ranges between 2 meter and 3 meter and the length I of the device 10 is smaller than the width of the device.

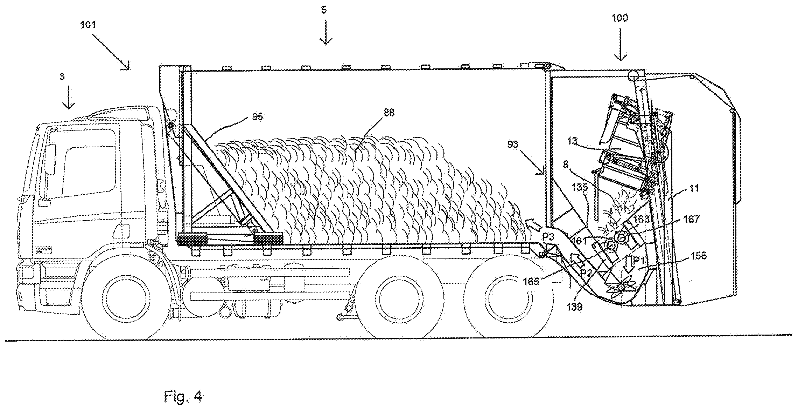

Figure 4 shows an alternative embodiment of the system 101. In the system 101, the device 1 is configured differently from the device 10 shown in the preceding figures. The lorry 3 and the storage compartment 5 of the system 101 are identical to the lorry 3 and the storage compartment 5 of the system 1. The difference between the device 1 and the device 100 is that the shredding mechanism 139 is disposed differently in the device 100, so that also the collecting unit 135 and the trough 156 are configured slightly differently, in particular in the longitudinal direction of the device 100. The shredding mechanism 139 still comprises two rotating bodies 161, 163, whose axes of rotation 165, 167 extend in the transverse direction of the space 21, wherein a plane through the axes of rotation 165, 167 of the bodies 161, 163 includes an angle of less than 45 degrees with a virtual horizontal plane. Such a configuration of the shredding mechanism 139 can increase the processing capacity thereof.

The storage compartment 5 and also the device 10, 100 that is pivotally connected thereto may be mounted permanently or detachably on the lorry 3, wherein the storage compartment 5 and the device 10, 100 can be used as standalone units.

Instead of using the bins 13, 15 shown in the figures, it is also possible to use larger bins in the device 10, 101, or only one bin, for example an 1100 L bin. The lifting mechanism may be adapted accordingly in that case.

The collecting unit may furthermore be configured asymmetrically, seen in the transverse direction of the space 21; an inner wall of the collecting unit may for example extend substantially vertically, whilst the opposite inner wall of the collecting unit includes an angle with the vertical to form the first or the second funnel-shaped collecting unit part.

## Claims

1. A system (1) for processing confidential material, which system comprises a device (10) for processing confidential material as well as a storage compartment (5), wherein the device is configured as a rear loader which is disposed at a rear side (93) of the storage compartment, wherein the device is provided with a lifting mechanism (11) for moving at least one bin (13, 15) for collecting confidential material, which lifting mechanism is disposed in a closable space (21) of the device, wherein the device is configured such that the bin can be moved from a loading position to an emptying position by means of the lifting mechanism, wherein, once the bin has been placed in the loading position, the closed closable space makes access to the bin impossible and the bin can be moved to the emptying position for being emptied, **characterised in that** the device is further provided with a collecting unit (35) and a shredding mechanism (39) and the bin can be moved to the emptying position for being emptied into the collecting unit, under which collecting unit the shredding mechanism is disposed by means of which the confidential material from the bin can be shredded, wherein the collecting unit, the shredding mechanism and a rotatable processing unit (41) of the device are disposed centrally in the transverse direction (b) of the closable space, wherein the centre of the collecting unit, the centre of the shredding mechanism and the centre of the rotatable processing unit coincide with the centre of the closable space, seen in the transverse direction of the closable space.

2. The system (1) according to claim 1, wherein the inlet of the collecting unit extends over at least half (50%) of the width (b) of the closable space.

3. The system (1) according to claim 1 or 2, wherein the collecting unit comprises at least a first collecting unit part (45), wherein at least a width dimension, measured in the transverse direction (b) of the closable space, between inner walls of the collecting unit decreases in the direction of the outlet (51), and at least a second collecting unit part (47), wherein at least the width dimension between the inner walls of the collecting unit remains constant,
wherein preferably at least one of the inner walls (46) of the first collecting unit part includes an angle with the vertical of less than 35 degrees, wherein preferably the collecting unit comprises a third collecting unit part (49), wherein at least a width dimension, measured in the transverse direction of the closable space, between inner walls (50) of the collecting unit decreases in the direction of the outlet, wherein the second collecting unit part is disposed between the first and the third funnel-shaped collecting unit part.

4. The system (1) according to any one of the preceding claims, wherein the collecting unit has a mirror-symmetrical configuration, seen in the transverse direction of the closable space, and/or
the collecting unit is asymmetrical, seen in the longitudinal direction (I) of the closable space.

5. The system (1) according to any one of the preceding claims, wherein the shredding mechanism extends over at least 20% of the width of the closable space, the shredding mechanism preferably extends over substantially the entire width of the closable space, preferably the width dimension of the inlet and/or the outlet of the shredding mechanism, measured in the transverse direction of the closable space, is at least 0.4 meter.

6. The system (1) according to any one of the preceding claims, wherein the rotatable processing unit (41) is disposed directly below the shredding mechanism for compressing the shredded material from the shredding machine and/or moving said material via a passage (60) to a storage compartment (5), preferably the width dimension of the outlet of the shredding mechanism, measured in the transverse direction (b) of the closable space, is substantially the same as the width dimension of the inlet of the processing unit, wherein preferably the rotatable processing unit is positioned in front of the inlet of the passage, wherein the shredded material can be moved to the outlet of the passage by means of the rotatable processing unit, preferably the outlet of the passage is larger than the inlet of the passage, preferably the width dimension of the outlet, measured in the transverse direction of the closable space, is substantially the same as the width dimension of the space.

7. The system (1) according to any one of the preceding claims, wherein the shredding mechanism comprises two rotating bodies (61, 63), whose axes of rotation extend in the transverse direction of the space, wherein a plane through the axes of rotation of the bodies coincides with a horizontal plane, or
the shredding mechanism comprises two rotating bodies, whose axes of rotation extend in the transverse direction of the space, wherein a plane through the axes of rotation of the bodies includes an angle of less than 45 degrees with a horizontal plane.

8. The system (1) according to any one of the preceding claims, wherein at least one inner wall of the space forms part of the collecting unit for guiding the material to the shredding mechanism.

9. The system (1) according to any one of the preceding claims, wherein the device is pivotally connected to the storage compartment near the rear side and also near the upper side of the storage compartment, wherein, to empty the storage compartment, the device can be pivoted from a position of use, in which material from the bins is to be processed, to an emptying position, in which emptying position the shredded material can be removed from the storage compartment via an at least partially open rear side of the storage compartment.

10. The system (1) according to any one of the preceding claims, wherein the system comprises a vehicle (3) on which the storage compartment as well as the device are or can be mounted.

11. The system (1) according to any one of the preceding claims, wherein the storage compartment has a length greater than the width and the height of the storage compartment, wherein the length of the device is smaller than the length of the storage compartment.

12. The system (1) according to any one of the preceding claims, wherein the width of the storage compartment is substantially the same as the width of the device, and/or
the height of the device is greater than the height of the storage compartment.

13. A method for processing confidential material by using a system (1) according to any one of the preceding claims, wherein a bin (13, 15) is placed in the lifting mechanism (11) disposed in the closable space (21), after which the closable space is closed to make access to the bin impossible before the bin is moved to the emptying position, wherein the material falling out of the bin upon emptying thereof is shredded.

14. The method according to claim 13, wherein the space remains closed during the shredding of the material, wherein the space is opened after said shredding, so that the bin can be removed from the loading position.

15. The method according to claim 13 or 14, wherein the material, after being shredded, is compressed and at the same time moved through a passage to a storage compartment (5) in one processing operation.

## Patentansprüche

1. System (1) zur Verarbeitung von vertraulichem Material, wobei das System eine Vorrichtung (10) zur Verarbeitung von vertraulichem Material sowie eine Lagerungskammer (5) umfasst, wobei die Vorrichtung als ein Hecklader konfiguriert ist, der an einer Hinterseite (93) der Lagerungskammer angeordnet ist, wobei die Vorrichtung mit einem Hubmechanismus (11) zum Bewegen mindestens eines Behälters (13, 15) zum Sammeln von vertraulichem Material versehen ist, wobei der Hubmechanismus in einem verschließbaren Raum (21) der Vorrichtung angeordnet ist, wobei die Vorrichtung so konfiguriert ist, dass der Behälter durch den Hubmechanismus aus einer Ladeposition in eine Entleerungsposition bewegt werden kann, wobei, wenn der Behälter in die Ladeposition platziert worden ist, der verschlossene verschließbare Raum Zugang zu dem Behälter unmöglich macht und der Behälter zum Entleeren in die Entleerungsposition bewegt werden kann, **dadurch gekennzeichnet, dass** die Vorrichtung ferner mit einer Sammeleinheit (35) und einem Zerkleinerungsmechanismus (39) versehen ist und der Behälter zum Entleeren in die Sammeleinheit in die Entleerungsposition bewegt werden kann, wobei unter der Sammeleinheit der Zerkleinerungsmechanismus angeordnet ist, mittels dem das vertrauliche Material aus dem Behälter zerkleinert werden kann, wobei die Sammeleinheit, der Zerkleinerungsmechanismus und eine drehbare Verarbeitungseinheit (41) der Vorrichtung mittig in der Querrichtung (b) des verschließbaren Raums angeordnet sind, wobei, in der Querrichtung des verschließbaren Raums gesehen, die Mitte der Sammeleinheit, die Mitte des Zerkleinerungsmechanismus und die Mitte der drehbaren Verarbeitungseinheit mit der Mitte des verschließbaren Raums zusammenfallen.

2. System (1) nach Anspruch 1, wobei sich der Einlass der Sammeleinheit über mindestens die Hälfe (50%) der Breite (b) des verschließbaren Raums erstreckt.

3. System (1) nach Anspruch 1 oder 2, wobei die Sammeleinheit mindestens einen ersten Sammeleinheitsteil (45), bei dem mindestens eine Breitenabmessung, in der Querrichtung (b) des verschließbaren Raums gemessen, zwischen den Innenwänden der Sammeleinheit in Richtung des Auslasses (51) abnimmt, und mindestens einen zweiten Sammeleinheitsteil (47), bei dem mindestens die Breitenabmessung zwischen den Innenwänden der Sammeleinheit konstant bleibt, umfasst,
wobei vorzugsweise mindestens eine der Innenwände (46) des ersten Sammeleinheitsteils einen Winkel mit der Vertikalen von weniger als 35 Grad einschließt, wobei vorzugsweise die Sammeleinheit einen dritten Sammeleinheitsteil (49) umfasst, bei dem mindestens eine Breitenabmessung, gemessen in der Querrichtung des verschließbaren Raums, zwischen den Innenwänden (50) der Sammeleinheit in Richtung des Auslasses abnimmt, wobei der zweite Sammeleinheitsteil zwischen dem ersten und dem dritten, trichterförmigen Sammeleinheitsteil angeordnet ist.

4. System (1) nach einem der vorhergehenden Ansprüche, wobei die Sammeleinheit, in der Querrichtung des verschließbaren Raums gesehen, eine spiegelsymmetrische Konfiguration aufweist, und/oder die Sammeleinheit, in der Längsrichtung (I) des verschließbaren Raums gesehen, asymmetrisch ist.

5. System (1) nach einem der vorhergehenden Ansprüche, wobei sich der Zerkleinerungsmechanismus über mindestens 20% der Breite des verschließbaren Raums erstreckt, sich der Zerkleinerungsmechanismus vorzugsweise über im Wesentlichen die gesamte Breite des verschließbaren Raums erstreckt, vorzugsweise die Breitenabmessung des Einlasses und/oder des Auslasses des Zerkleinerungsmechanismus, in der Querrichtung des verschließbaren Raums gemessen, mindestens 0,4 Meter beträgt.

6. System (1) nach einem der vorhergehenden Ansprüche, wobei die drehbare Verarbeitungseinheit (41) zum Komprimieren des zerkleinerten Materials von der Zerkleinerungsmaschine und/oder Bewegen des Materials über einen Durchgang (60) zu einer Lagerungskammer (5) direkt unter dem Zerkleinerungsmechanismus angeordnet ist, vorzugsweise die Breitenabmessung des Auslasses des Zerkleinerungsmechanismus, in der Querrichtung (b) des verschließbaren Raums gemessen, im Wesentlichen gleich der Breitenabmessung des Einlasses der Verarbeitungseinheit ist, wobei vorzugsweise die drehbare Verarbeitungseinheit vor dem Einlass des Durchgangs positioniert ist, wobei das zerkleinerte Material mittels der drehbaren Verarbeitungseinheit zu dem Auslass des Durchgangs bewegt werden kann, vorzugsweise der Auslass des Durchgangs größer als der Einlass des Durchgangs ist, vorzugsweise die Breitenabmessung des Auslasses, in der Querrichtung des verschließbaren Raums gemessen, im Wesentlichen gleich der Breitenabmessung des Raums ist.

7. System (1) nach einem der vorhergehenden Ansprüche, wobei der Zerkleinerungsmechanismus zwei rotierende Körper (61, 63) umfasst, deren Drehachse in der Querrichtung des Raums verlaufen, wobei eine Ebene durch die Drehachse der Körper mit einer horizontalen Ebene zusammenfällt, oder
der Zerkleinerungsmechanismus zwei rotierende Körper umfasst, deren Drehachsen in der Querrichtung des Raums verlaufen, wobei eine Ebene durch die Drehachse der Körper einen Winkel von weniger als 45 Grad mit einer horizontalen Ebene einschließt.

8. System (1) nach einem der vorhergehenden Ansprüche, wobei mindestens eine Innenwand des Raums Teil der Sammeleinheit zum Führen des Materials zu dem Zerkleinerungsmechanismus umfasst.

9. System (1) nach einem der vorhergehenden Ansprüche, wobei die Vorrichtung in der Nähe der Hinterseite und auch in der Nähe der Oberseite der Lagerungskammer schwenkbar mit der Lagerungskammer verbunden ist, wobei die Vorrichtung zum Entleeren der Lagerungskammer aus einer Gebrauchsposition, in der Material von den Behälter verarbeitet werden soll, in eine Entleerungsposition geschwenkt werden kann, wobei in der Entleerungsposition das zerkleinerte Material über mindestens eine teilweise geöffnete Hinterseite der Lagerungskammer aus der Lagerungskammer entfernt werden kann.

10. System (1) nach einem der vorhergehenden Ansprüche, wobei das System ein Fahrzeug (3) umfasst, auf dem die Lagerungskammer sowie die Vorrichtung montiert sind oder werden können.

11. System (1) nach einem der vorhergehenden Ansprüche, wobei die Lagerungskammer eine Länge aufweist, die größer als die Breite und die Höhe der Lagerungskammer ist, wobei die Länge der Vorrichtung kleiner als die Länge der Lagerungskammer ist.

12. System (1) nach einem der vorhergehenden Ansprüche, wobei die Breite der Lagerungskammer im Wesentlichen gleich der Breite der Vorrichtung ist, und/oder die Höhe der Vorrichtung größer als die Höhe der Lagerungskammer ist.

13. Verfahren zur Verarbeitung von vertraulichem Material durch Verwendung eines Systems (1) nach einem der vorhergehenden Ansprüche, wobei ein Behälter (13, 15) in den in dem verschließbaren Raum (21) angeordneten Hubmechanismus (11) platziert wird, wonach der verschließbare Raum geschlossen wird, um Zugang zu dem Behälter unmöglich zu machen, bevor der Behälter in die Entleerungsposition bewegt wird, wobei das beim Entleeren des Behälters aus diesem fallende Material zerkleinert wird.

14. Verfahren nach Anspruch 13, wobei der Raum während des Zerkleinerns des Materials verschlossen bleibt, wobei der Raum nach dem Zerkleinern geöffnet wird, so dass der Behälter aus der Ladeposition entfernt werden kann.

15. Verfahren nach Anspruch 13 oder 14, wobei das Material nach seinem Zerkleinern komprimiert wird und gleichzeitig in einem Arbeitsgang durch einen Durchgang zu einer Lagerungskammer (5) bewegt wird.

## Revendications

1. Système (1) pour traiter du matériel confidentiel, lequel système comprend un dispositif (10) pour traiter du matériel confidentiel ainsi qu'un compartiment de stockage (5), dans lequel le dispositif est configuré comme un chargeur arrière qui est disposé au niveau d'un côté arrière (93) du compartiment de stockage, dans lequel le dispositif est pourvu d'un mécanisme de levage (11) pour déplacer au moins un bac (13, 15) pour collecter du matériel confidentiel, lequel mécanisme de levage est disposé dans un espace fermable (21) du dispositif, dans lequel le dispositif est configuré de sorte que le bac puisse être déplacé d'une position de chargement à une position de vidage au moyen du mécanisme de levage, dans lequel, une fois le bac placé dans la position de chargement, l'espace fermable fermé rend l'accès au bac impossible et le bac peut être déplacé vers la position de vidage pour être vidé, **caractérisé en ce que** le dispositif est en outre pourvu d'une unité de collecte (35) et d'un mécanisme de déchiquetage (39) et le bac peut être déplacé vers la position de vidage pour être vidé dans l'unité de collecte, sous laquelle unité de collecte est disposé le mécanisme de déchiquetage au moyen duquel le du matériel confidentiel provenant du bac peuvent être déchiquetés, dans lequel l'unité de collecte, le mécanisme de déchiquetage et une unité de traitement rotative (41) du dispositif sont disposés au centre dans la direction transversale (b) de l'espace fermable, dans lequel le centre de l'unité de collecte, le centre du mécanisme de déchiquetage et le centre de l'unité de traitement rotative coïncident avec le centre de l'espace fermable, en regardant dans la direction transversale de l'espace fermable.

2. Système (1) selon la revendication 1, dans lequel l'entrée de l'unité de collecte s'étend sur au moins la moitié (50%) de la largeur (b) de l'espace fermable.

3. Système (1) selon la revendication 1 ou 2, dans lequel l'unité de collecte comprend au moins une première partie d'unité de collecte (45), dans laquelle au moins une dimension de largeur, mesurée dans la direction transversale (b) de l'espace fermable, entre les parois intérieures de l'unité de collecte diminue dans la direction de la sortie (51), et au moins une deuxième partie d'unité de collecte (47), dans laquelle au moins la dimension de largeur entre les parois intérieures de l'unité de collecte reste constante,
dans lequel de préférence
au moins une des parois intérieures (46) de la première partie d'unité de collecte forme un angle avec la verticale inférieur à 35 degrés,
dans lequel de préférence
l'unité de collecte comprend une troisième partie d'unité de collecte (49), dans laquelle au moins une dimension de largeur, mesurée dans la direction transversale de l'espace fermable, entre les parois intérieures (50) de l'unité de collecte diminue dans la direction de la sortie, où la deuxième partie d'unité de collecte est disposée entre la première et la troisième partie d'unité de collecte en forme d'entonnoir.

4. Système (1) selon l'une quelconque des revendications précédentes, dans lequel l'unité de collecte a une configuration symétrique en miroir, en regardant dans la direction transversale de l'espace fermable, et/ou
l'unité de collecte est asymétrique, en regardant dans la direction longitudinale (I) de l'espace fermable.

5. Système (1) selon l'une quelconque des revendications précédentes, dans lequel le mécanisme de déchiquetage s'étend sur au moins 20% de la largeur de l'espace fermable, le mécanisme de déchiquetage s'étend de préférence sur sensiblement toute la largeur de l'espace fermable, de préférence la dimension de largeur de l'entrée et/ou de la sortie du mécanisme de déchiquetage, mesurée dans la direction transversale de l'espace fermable, est d'au moins 0,4 mètre.

6. Système (1) selon l'une quelconque des revendications précédentes, dans lequel l'unité de traitement rotative (41) est disposée directement en dessous du mécanisme de déchiquetage pour comprimer le matériel déchiqueté provenant de la déchiqueteuse et/ou déplacer ledit matériel via un passage (60) vers un compartiment de stockage (5), de préférence la dimension de largeur de la sortie du mécanisme de déchiquetage, mesurée dans la direction transversale (b) de l'espace fermable, est sensiblement la même que la dimension de largeur de l'entrée de l'unité de traitement,
dans lequel de préférence l'unité de traitement rotative est positionnée devant l'entrée du passage, dans lequel le matériel déchiqueté peut être déplacé vers la sortie du passage au moyen de l'unité de traitement rotative, de préférence la sortie du passage est plus grande que l'entrée du passage, de préférence la dimension de largeur de la sortie, mesurée dans la direction transversale de l'espace fermable, est sensiblement la même que la dimension de largeur de l'espace.

7. Système (1) selon l'une quelconque des revendications précédentes, dans lequel le mécanisme de déchiquetage comprend deux corps rotatifs (61, 63), dont les axes de rotation s'étendent dans la direction transversale de l'espace, dans lequel un plan passant par les axes de rotation des corps coïncide avec un plan horizontal, ou
le mécanisme de déchiquetage comprend deux corps rotatifs, dont les axes de rotation s'étendent dans la direction transversale de l'espace, dans lequel un plan passant par les axes de rotation des corps forme un angle inférieur à 45 degrés avec un plan horizontal.

8. Système (1) selon l'une quelconque des revendications précédentes, dans lequel au moins une paroi intérieure de l'espace fait partie de l'unité de collecte pour guider le matériel vers le mécanisme de déchiquetage.

9. Système (1) selon l'une quelconque des revendications précédentes, dans lequel le dispositif est relié en pivotement au compartiment de stockage près du côté arrière et également près du côté supérieur du compartiment de stockage, dans lequel, pour vider le compartiment de stockage, le dispositif peut être pivoté d'une position d'utilisation, dans laquelle le matériel provenant des bacs doit être traité, à une position de vidage, dans laquelle position de vidage le matériel déchiqueté peut être retiré du compartiment de stockage via un côté arrière au moins partiellement ouvert du compartiment de stockage.

10. Système (1) selon l'une quelconque des revendications précédentes, dans lequel le système comprend un véhicule (3) sur lequel le compartiment de stockage ainsi que le dispositif sont ou peuvent être montés.

11. Système (1) selon l'une quelconque des revendications précédentes, dans lequel le compartiment de stockage a une longueur supérieure à la largeur et à la hauteur du compartiment de stockage, dans lequel la longueur du dispositif est inférieure à la longueur du compartiment de stockage.

12. Système (1) selon l'une quelconque des revendications précédentes, dans lequel la largeur du compartiment de stockage est sensiblement la même que la largeur du dispositif, et/ou
la hauteur du dispositif est supérieure à la hauteur du compartiment de stockage.

13. Procédé de traitement du matériel confidentiel en utilisant un système (1) selon l'une quelconque des revendications précédentes, dans lequel un bac (13, 15) est placé dans le mécanisme de levage (11) disposé dans l'espace fermable (21), après quoi l'espace fermable est fermé pour rendre l'accès au bac impossible avant que le bac ne soit déplacé vers la position de vidage, où le matériel tombant du bac lors du vidage de celui-ci est déchiqueté.

14. Procédé selon la revendication 13, dans lequel l'espace reste fermé pendant le déchiquetage du matériel, dans lequel l'espace est ouvert après ledit déchiquetage, de sorte que le bac puisse être retiré de la position de chargement.

15. Procédé selon la revendication 13 ou 14, dans lequel le matériel, après avoir été déchiqueté, est comprimé et en même temps déplacé à travers un passage vers un compartiment de stockage (5) en une opération de traitement.
